# EUROPÄISCHE PATENTSCHRIFT

(11) **EP 0 500 537 B1**
(45) Veröffentlichungstag und Bekanntmachung des Hinweises auf die Patenterteilung: **30.11.1994**
(21) Anmeldenummer: 90912750.8
(22) Anmeldetag: 05.09.1990
(51) Int. Cl.: A46B 13/02

(54) **ELEKTRISCHE ZAHNBÜRSTE MIT LÖSBAREM BÜRSTENTEIL**
ELECTRIC TOOTHBRUSH WITH DETACHABLE BRUSH PART
BROSSE A DENTS ELECTRIQUE A PARTIE BROSSE AMOVIBLE

(30) Priorität: 14.11.1989 DE 3937853
(43) Veröffentlichungstag der Anmeldung: 02.09.1992
(73) Patentinhaber: Braun Aktiengesellschaft, Frankfurt am Main (DE)
(72) Erfinder: KRESSNER, Gerhard, D-6472 Altenstadt/Höchst (DE)
(86) Internationale Anmeldenummer: DE9000673
(87) Internationale Veröffentlichungsnummer: WO9107117

(56) Entgegenhaltungen:
- EP-A- 0 254 397
- US-A- 4 827 552

## Beschreibung

Die Erfindung geht aus von einer elektrischen Zahnbürste, bestehend aus einem Griffteil mit einem elektromotorischen Antrieb sowie einer Antriebswelle und einem Bürstenteil mit einer Welle zum Antrieb eines drehbaren Borstenträgers und einem Gehäuse zur Aufnahme der Welle sowie zur Lagerung des Borstenträgers. Dabei ist der Bürstenteil mit dem Griffteil über Kupplungsmittel zur Festlegung des Bürstenteils am Griffteil verbindbar und die Antriebswelle mit der Welle über Kopplungsmittel koppelbar, wobei Kupplungsmittel, die dem Gehäuse des Bürstenteils und dem Griffteil zugeordnet sind, zusammenwirken.

Bereits aus der US-PS 4 827 552 ist eine elektrische Zahnbürste mit diesen Merkmalen bekannt. Der lösbare Bürstenteil dieser Zahnbürste muß einerseits axial gesichert werden, um ein unbeabsichtigtes Lösen des Bürstenteils vom Griffteil, beispielsweise während des Gebrauchs der Zahnbürste, zu vermeiden. Dadurch, daß der Borstenträger bzw. die Bürste durch den elektromotorischen Antrieb in eine Rotationsbewegung versetzt wird, muß das Gehäuse des Bürstenteils aber auch gegen eine radiale Verdrehung bezüglich des Griffteils gesichert werden, um ein Mitdrehen des Gehäuses mit der vom Gehäuse aufgenommenen Welle zu verhindern. Diese radiale und axiale Sicherung wird bei der bekannten Zahnbürste dadurch realisiert, daß am Griffteil angeordnete, knopfartige Erhöhungen in entsprechende am Gehäuse des Bürstenteils angeordnete Vertiefungen einrasten. Die Festlegung des Bürstenteils am Griffteil in axialer und radialer Richtung erfolgt somit durch ein einziges Kupplungsmittel. Nachteilig erweist sich diese Anordnung dadurch, daß Toleranzen in der Positionierung der zu kuppelnden Teile, nämlich des Griffteils und des Gehäuseteils sowie der Antriebswelle und der Welle im Gehäuseteil nicht ohne weiteres ausgeglichen werden können. Sofern die Antriebswelle und die Welle des Bürstenteils nicht exakt miteinander fluchten, ist eine Kupplung des Bürstenteils mit dem Griffteil unter Vermeidung von Verspannungen zwischen dem Gehäuseteil und dem Griffteil praktisch nicht möglich. Darüber hinaus werden im allgemeinen die Gehäuseteile elektrischer Zahnbürsten als Spritzgußteile aus technischem Kunststoff hergestellt. Die Kupplungsmittel sind daher aufgrund der Verwendung relativ weicher Materialien, einem gewissen Verschleiß unterworfen und verlieren im Laufe der Gebrauchsdauer der Zahnbürste ihre Funktionsfähigkeit.

Es ist Aufgabe der Erfindung, eine elektrische Zahnbürste mit den eingangs erwähnten Merkmalen derart weiterzubilden, daß eine sichere Kupplung von Bürstenteil und Griffteil auch unter Inkaufnahme gewisser Toleranzen in der Positionierung der kuppelnden Teile zueinander gewährleistet Ist. Des weiteren soll die Anordnung der Kupplungsmittel derart getroffen werden, daß ein möglicher Verschleiß der Kupplungsmittel nicht zu einer Beeinträchtigung der Funktionsfähigkeit der Zahnbürste führt.

Diese Aufgabe wird durch eine elektrische Zahnbürste der eingangs genannten Art dadurch gelöst, daß eine Festlegung des Bürstenteils am Griffteil in, bezogen auf eine Längsmittelachse der Welle, axialer und radialer Richtung, jeweils durch separate Kupplungsmittel bewirkt wird, wobei Kupplungsmittel, die der Antriebswelle und der Welle zugeordnet sind, zusammenwirken.

Im Sprachgebrauch der vorliegenden Anmeldung wird unter den Begriffen Kupplungsmittel und Kopplungsmittel folgendes verstanden: Ist von "Kupplungsmitteln" die Rede, ist eine Verbindung der Gehäuseteile des Bürstenteils und des Griffteils gemeint. Hingegen wird durch "Kopplungsmittel" eine Verbindung der Antriebswelle mit der Welle im Bürstenteil zur Drehmomentübertragung beschrieben.

Die funktionelle Auftrennung der Kupplungsmittel in solche Mittel, die lediglich zur radialen Festlegung und in andere Kupplungsmittel, die lediglich zur axialen Festlegung des Bürstenteils am Griffteil dienen, schafft die Voraussetzung dafür, daß Lagetoleranzen der Kupplungsteile zueinander ausgeglichen werden können. Die zu kuppelnden Teile, die die Mittel zur axialen Festlegung aufweisen, können hinsichtlich der radialen Positionierung zueinander Lagetoleranzen aufweisen. Andererseits können die Teile, die mit den Kupplungsmitteln zur radialen Festlegung des Bürstenteils am Griffteil ausgestattet sind, axiale Lagetoleranzen zueinander aufweisen. Durch diese Maßnahmen kann unter Inkaufnahme von gewissen Toleranzen in der Positionierung der zu kuppelnden Teile untereinander, so zum Beispiel für den Fall einer mit der Welle im Bürstenteil nicht fluchtenden Antriebswelle, oder für den Fall gewisser Toleranzen der Länge der Welle bzw. Antriebswelle oder des Gehäuses des Bürstenteils, dennoch eine sichere und spannungsfreie Verbindung des Bürstenteils mit dem Griffteil erfolgen. Darüber hinaus erlaubt die funktionelle Auftrennung in Mittel zur axialen und radialen Festlegung eine Anordnung der einem Verschleiß unterworfenen Mittel in solche Teile der Zahnbürste, die aus hygienischen bzw. zahnmedizinischen Gründen ohnehin von Zeit zu Zeit auszutauschen sind. Durch die Maßnahme, daß die Kopplungsmittel der Antriebswelle und Welle als Axialsicherung und die Kupplungsmittel des Gehäuses des Bürstenteils und des Griffteils als Radialsicherung zur Festlegung des Bürstenteils am Griffteil ausgebildet sind, wird die an und für sich geringen Verschleiß unterworfene Radialsicherung in den Bereich des Griffteils der Zahnbürste gelegt, während die höherem Verschleiß unterworfene Axialsicherung in den Bereich der Welle bzw. Antriebswelle verlagert wird. Die Antriebswelle besteht bei elektrischen Zahnbürsten in aller Regel aus einem verschleißfreien Material, z.B. Edelstahl, während die Welle zum Antrieb eines Borstenträgers aus verschleißanfälligerem Material, wie zum Beispiel einem technischen Kunststoff, hergestellt ist. Die verschleißanfälligen Teile der Mittel sind im Bereich des Bürstenteils angeordnet, welcher aufgrund von Abnutzungserscheinungen der Borsten des im Bürstenteil gelagerten Borstenträgers bzw. aus hygienischen Gründen nach einem gewissen Zeitraum, im Bereich zwischen etwa 2-4 Monaten, ausgetauscht werden sollte. Der Griffteil der Zahnbürste mit den hochwertigen Komponenten, wie Akkumulatoren, Elektromotor und Getriebe ist jedenfalls infolge der Verbindung des Bürstenteils mit dem Griffteil durch die spezielle Anordnung der Mittel keinem Verschleiß unterworfen. Dadurch, daß die Axialsicherung mittels Rastmittel der Welle erfolgt, die in ein Widerlager der Antriebswelle eingreifen, wird eine robuste Ausführung der axialen Sicherung angegeben, bei der das in hohem Maße dem Verschleiß unterworfene Rastmittel an der Welle ohnehin durch Austausch des Bürstenteils von Zeit zu Zeit erneuert wird. Die Maßnahme, in eine Aufnahmehülse der Welle zur Aufnahme der Antriebswelle Mittel vorzusehen, die die Welle aus einer beliebigen Antriebsstellung heraus beim Kopplungsvorgang zwischen der Antriebswelle und der Welle zwangsweise in eine vorgegebene Kopplungsposition ausrichten, dient einer sicheren, unproblematischen axialen Festlegung der Teile. Die Tatsache, daß zwischen der Antriebwelle und der Welle Drehmomente zu übertragen und infolgedessen im Kopplungsbereich beider Wellen Kraftübertragungsflächen anzubringen sind, schließt es aus, daß beide Wellen in jeder beliebigen Position zueinander miteinander verbindbar sind. Die Mittel zur Zwangsausrichtung der Welle bezüglich der Antriebswelle, die während des Kopplungsvorganges beider Wellen wirksam werden, erleichtern das Koppeln beider Wellen in besonders vorteilhafter Weise. Diese Mittel zur Zwangsausrichtung können einerseits durch in einer Aufnahmehülse der Welle angeordnete rechts- und linkssteigende Schraubenflächen, die mit einem einseitig abgeflachten Endstück der Antriebswelle zusammenwirken oder andererseits durch ein Kreissegmentprofil, das mit einer Fase am Endstück der Antriebswelle zusammenwirkt, realisiert werden. Beide Maßnahmen bewirken beim Einführen der Antriebswelle in die Aufnahmehülse der Welle eine sichere, zwangsweise Ausrichtung der Welle bezüglich der Antriebswelle, wobei die letztgenannte Maßnahme sich durch eine besonders einfache Herstellbarkeit der Spritzgußform für die Welle auszeichnet. Die Maßnahme, daß eine Radialsicherung mittels kraftübertragender Außenwandflächen des Griffteils erfolgt, welche mit entsprechenden, komplementär geformten Innenwandflächen des Gehäuses des Bürstenteils zusammenwirken, hat den Vorteil, daß jegliche Krafteinleitung im Bereich der Radialsicherung flächig erfolgt und Kantenberührungen bzw. Punktberührungen, welche zum Verschleiß oder zur Verletzung des Gehäuses im Bereich der Radialsicherung führen könnten, vermieden werden. Insbesondere bei der Verwendung von technischen Kunststoffen für die Ausbildung der Teile für die Radialsicherung machen sich die relativ großen Kraftangriffsflächen zur Vermeidung von Verletzungen oder Verschleiß der Gehäuseteile äußerst vorteilhaft bemerkbar. Dadurch, daß einander benachbarte, kraftübertragende Flächen in einem Winkel von etwa 90° angeordnet sind, ergibt sich eine optimale Krafteinleitung im Bereich der Radialsicherung, unabhängig davon, ob die Antriebswelle im oder gegen den Uhrzeigersinn rotiert. Insbesondere für einen alternierend rotierenden Antrieb der Welle ergeben sich aus der Anordnung von einander gegenüberliegenden, kraftübertragenden Flächen in einem Winkel von etwa 90° vorteilhafte Verhältnisse für die Krafteinleitung. Schließlich ermöglicht die Ausgestaltung der Übergänge zwischen den einzelnen, benachbarten, kraftübertragenden Flächen als konkave bzw. konvexe Teilflächen eines Zylinders oder Kegels eine einfache und problemlose Zusammenfügung des Griffteils und Gehäuseteils im Bereich der Radialsicherung.

Weitere Vorteile der Erfindung ergeben sich aus der nachfolgenden Beschreibung der Ausführungsbeispiele in Verbindung mit den Figuren.

Es zeigen:
- Fig. 1: einen schematischen Schnitt einer elektrischen Zahnbürste mit Mitteln zur Verbindung von Bürstenteil und Griffteil,
- Fig. 2: einen Längsschnitt durch die Zahnbürste der Fig. 1 im Bereich der Mittel,
- Fig. 3: eine Ansicht A-A des Gehäuseschafts der Fig. 2,
- Fig. 4 a - d: verschiedene Schnitte und eine Ansicht eines Profilringes,
- Fig. 5 a,b,c,e,g: eine Ansicht und verschiedene Schnitte der Welle 34 mit einem ersten Ausführungsbeispiel der Mittel zur Zwangsführung und
- Fig. 6 c,g: ein zweites Ausführungsbeispiel der Mittel zur Zwangsführung in zwei Schnitten.

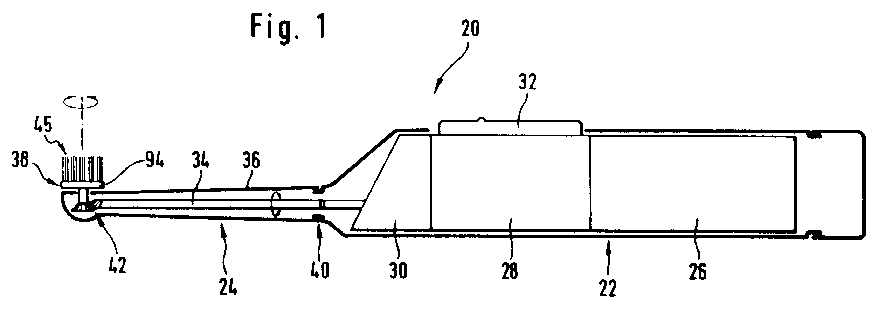

In Figur 1 ist mit der Bezugsziffer 20 eine elektrische Zahnbürste bezeichnet. Die Zahnbürste 20 besteht aus einem Griffteil 22 und einem an dem Griffteil 22 ankuppelbaren Bürstenteil 24. Der Griffteil 22 nimmt auf einen Akkumulator 26 oder auch eine Batterie, einen Elektromotor 28 und eine Umsteuerungseinrichtung 30 zur Umsetzung der kontinuierlichen Rotationsbewegung des Elektromotors 28 in eine alternierende Drehbewegung. Am Griffteil außen ist ein Schalter 32 zur Aktivierung der Zahnbürste 20 angeordnet. Der Bürstenteil 24 besteht aus einem hohlen Trägerrohr 36, welches eine Welle 34 aufnimmt. Das Trägerrohr 36 und die Welle 34 sind über in Fig. 1 nicht näher dargestellte Mittel 40 mit dem Griffteil 22 verbindbar. An dem dem Griffteil 22 abgewandten Ende des Bürstenteils 24 ist ein Borstenträger 38 angeordnet mit einer Trägerplatte 49 zur Aufnahme von Borsten 45 bzw. Borstenbüscheln. Der Borstenträger 38 wird über ein am Kopfende der Welle 34 angeordnetes Kegelradgetriebe 42 angetrieben. Die Drehachse des Borstenträgers 38 schließt mit der Drehachse der Welle 34 einen Winkel von ca. 90° ein. Dieser Winkel kann jedoch, ohne die Erfindung zu beschränken, auch Werte von 30° - 120° einnehmen. Über das Kegelradgetriebe 42 wird das Drehmoment der alternierend drehbaren Welle 34 auf den im Winkel zur Welle 34 angeordneten Borstenträger 38 übertragen. Der vom Borstenträger 38 überstrichene Drehwinkelbereich kann Werte im Bereich zwischen +/- 20° und +/- 100° annehmen, bevorzugt jedoch einen Wert von etwa +/-35°.

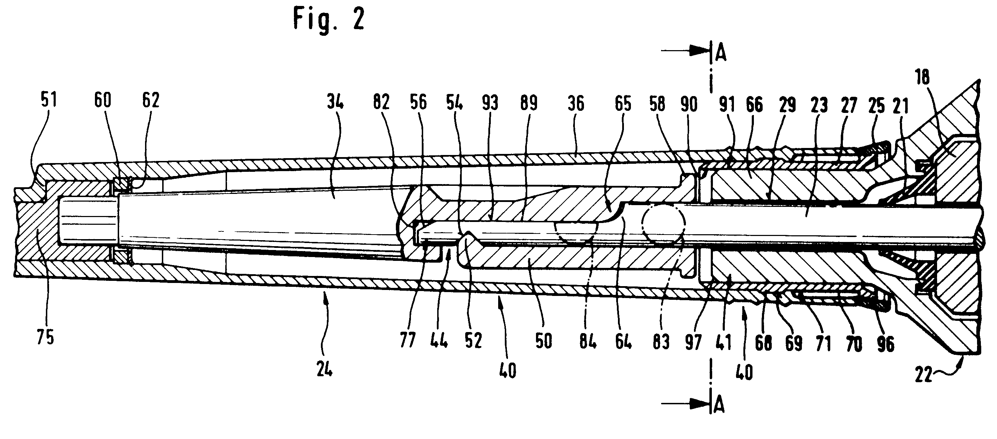

In Fig. 2 ist der für die Darstellung der Verbindungsmittel 40 wesentliche Abschnitt der Zahnbürste 20 im Längsschnitt dargestellt. Der Griffteil 22 nimmt einen Gehäuseinnenteil 18 auf, in dem unter anderem die Antriebsmittel der Zahnbürste angeordnet sind. Eine zwischen dem Gehäuseinnenteil 18 und dem Griffteil 22 angeordnete Lippendichtung 21 umschließt die in diesem Bereich zylindrische Antriebswelle 23 und verhindert ein Eindringen von Schmutz und Feuchtigkeit in das Innere des Griffteils 22. Durch eine zentrale Bohrung 29 eines am Griffteil 22 einstückig angeformten Gehäuseschafts 66 tritt die Antriebswelle 23 aus dem Griffteil 22 heraus. In einem Übergangsbereich 64 der Antriebswelle 23 verjüngt sich die Antriebswelle 23 von einem kreisförmigen Querschnitt 83 auf einen in etwa halbkreisförmigen Querschnitt 84. Eine ebene, das halbkreisförmige Endstück 77 der Antriebswelle 23 begrenzende Fläche 89 dient zur Übertragung des Antriebsmoments der Antriebswelle 23 auf die Welle 34. Das Endstück 77 der Antriebswelle 23 weist eine Fase 56 im Anschluß an die Fläche 89 auf. Im der Fläche 89 abgewandten Bereich des Endstücks 77 ist eine Rastkerbe 54 an der Antriebswelle 23 vorgesehen.

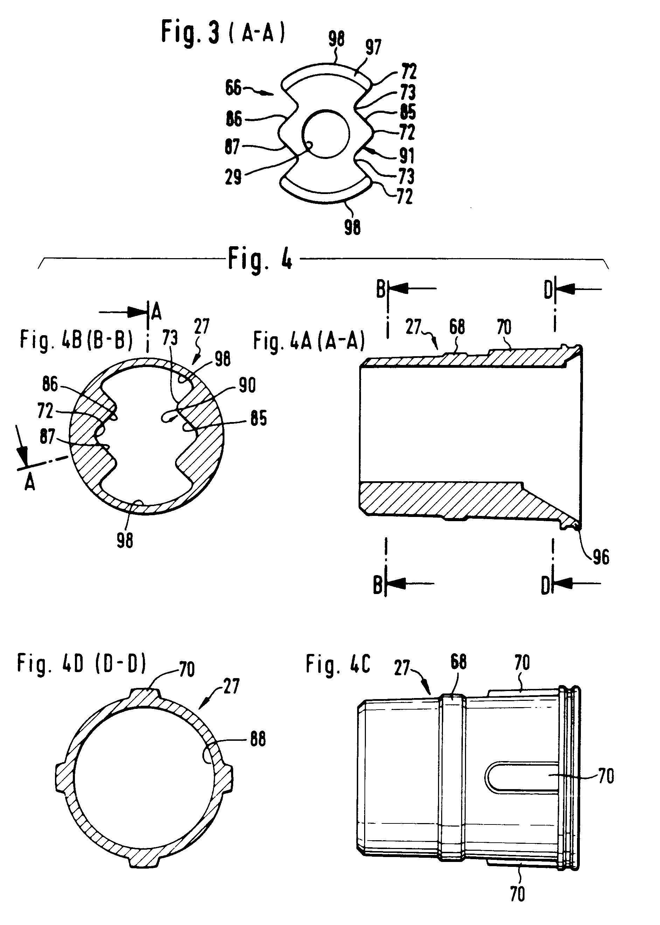

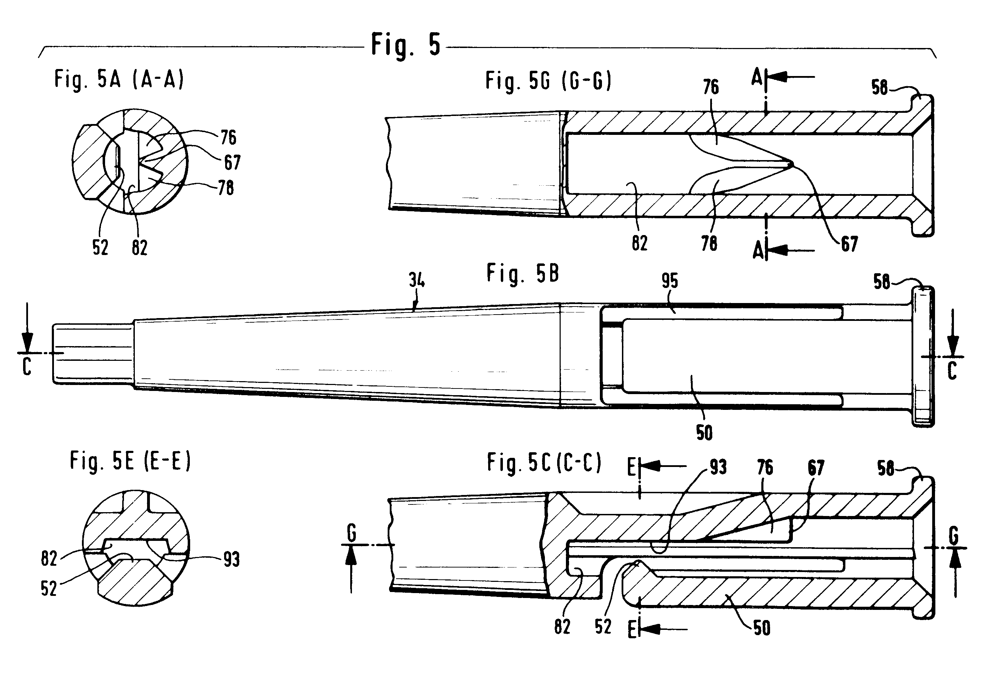

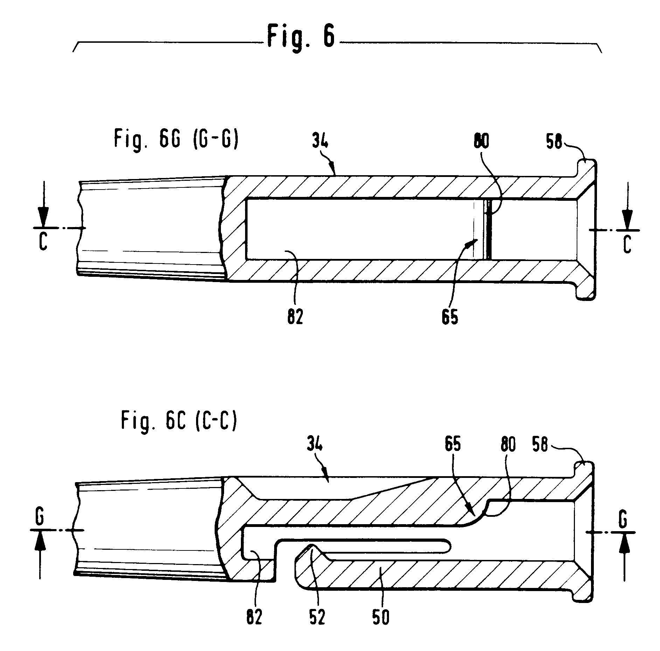

Der Bürstenteil 24 besteht aus einem leicht konisch auslaufenden Trägerrohr 36, welches im Inneren die Welle 34 aufnimmt. Die Welle 34 ist im dem Griffteil 22 abgewandten Teil formschlüssig mit einem Wellenstück 75 verbunden, welches zum Antrieb eines nicht dargestellten Borstenträgers dient. Das Wellenstück 75 ist mittels einer Im Trägerrohr 36 vorgesehenen Schulter 51 und eines Ringes 60, der durch einen Sicherungsring 62 im Inneren des Trägerrohrs 36 gehalten ist, gegen eine axiale Verschiebung in Richtung einer Längsmittelachse der Welle 34 bzw. der Antriebswelle 23 gesichert. Die Welle 34 ihrerseits ist zum einen durch das Wellenstück 75 und zum anderen durch einen im Trägerrohr 36 am dem Griffteil 22 zugewandten Ende, eingeklipsten Profilring 27 gegen axiale Verschiebungen gesichert. Radial ist die Welle 34 lediglich im Bereich der wenigstens formschlüssigen Verbindung mit dem Wellenstück 75 festgelegt. In dem dem Profilring 27 zugewandten Bereich ist die Welle 34 gegen radiale Auslenkungen nicht gesichert. Durch diese Maßnahme kann die Welle 34 durch eine Veränderung ihrer Winkellage bezüglich der Längsmittelachse der Antriebswelle 23 gewisse Toleranzen, so zum Beispiel die Lageabweichung einer mit der idealen Längsmittelachse nicht fluchtenden Antriebswelle 23 ausgleichen. Die axiale Sicherung der Welle 34 wird im einzelnen dadurch gewährleistet, daß sich eine an der Welle 34 angeformte Ringschulter 58 an einem Innenprofil 90 (Fig. 4) des Profilringes 27 abstützt. Zur Aufnahme der Antriebswelle 23 weist die Welle 34 eine Aufnahmehülse 82 auf, deren Innenquerschnitt sich komplementär der Querschnittsänderung der Welle 23 von einem kreisförmigen Querschnitt 83 auf einen halbkreisförmigen Querschnitt 84 verjüngt. Im Übergangsbereich zwischen diesen beiden Querschnittsformen sind im Inneren der Aufnahmehülse 82 Mittel 65 vorgesehen, die die Welle 34 aus einer beliebigen Antriebstellung heraus beim Kopplungsvorgang zwischen der Antriebswelle 23 und der Welle 34 zwangsweise in eine vorgegebene Kopplungsposition ausrichten. Zwei bevorzugte Ausführungsformen dieser Mittel sind in den Figuren 5 und 6 detaillierter wiedergegeben. In Richtung der Ringschulter 58 erweitert sich der Innenquerschnitt der Aufnahmehülse 82 kegelförmig, wodurch ein Einführen der Antriebswelle 23 in die Aufnahmehülse 82 erleichtert wird. Der Profilring 27 Ist über seinen Außenumfang mit einer ringförmigen Verdickung 68 versehen, welche in Verbindung mit einer an der Innenwand des Trägerrohrs 36 angeordneten Ringnut 69 als Befestigungs- bzw. Rastmittel zur Fixierung des Profilringes 27 Im Trägerrohr 36 dient. Der Profilring 27 weist mehrere an der Außenwand angeordnete, axiale Längsstege 70 auf, welche in an der Innenwand des Trägerrohrs 36 befindliche axiale Längsnuten 71 eingreifen. Durch diese Maßnahmen ist der Profilring 27 gegen ein Verdrehen innerhalb des Trägerrohrs 36 gesichert. Aus dem Trägerrohr 36 herausragende Rastmittel 96 des Profilrings 27 dienen zur Befestigung eines Farbringes 25, so daß der Bürstenteil 24 individuell kennzeichenbar ist.

Das Innenprofil 90 des Profilringes 27 und ein Außenprofil 91 des Gehäuseschafts 66 wirken zusammen als Radialsicherung 41 zur drehfesten Verbindung des Trägerrohrs 36 mit dem Griffteil 22. Die axiale Sicherung des Bürstenteils 24 am Griffteil 22, also eine Sicherung des Bürstenteils 24 gegen ein Abrutschen des Bürstenteils 24 vom Griffteil 22 in Richtung der Längsmittelachse der Antriebswelle 23 wird dadurch bewerkstelligt, daß an der Welle 34 im Bereich der Aufnahmehülse 82 eine Federzunge 50 vorgesehen ist, welche an ihrem federnden Ende eine Rastnase 52 trägt. Nach Einführen der Antriebswelle 23 in die Aufnahmehülse 82 greift die Rastnase 52 in die Rastkerbe 54 der Antriebswelle 23 ein und sorgt für eine axiale Festlegung des Bürstenteils 24 am Griffteil 22.

Anhand der Darstellung der Figuren 3 und 4 wird die Wirkungsweise der Radialsicherung 41 im folgenden näher erläutert. Die Ansicht A-A des Gehäuseschafts 66 der Figur 3 zeigt die besondere, vorteilhafte Profilierung des Seitenwandbereiches des Gehäuseschafts 66. Der Gehäuseschaft 66 weist die Grundform eines geraden Zylinders bzw. eines geraden Kegelstumpfs auf, wobei sich der Gehäuseschaft 66 im letztgenannten Fall in Richtung des Kopfendes des Griffteils 22 verjüngt, um ein Einführen in den komplementär geformten Profilring 27 zu erleichtern. Die Leitkurve der Zylinder- bzw. Kegelfläche weist eine 180°-Drehsymmetrie auf, und wird an zwei einander diametral gegenüberliegenden Bereichen durch einen 90°-Kreisbogen 98 gebildet. Diese Kreisbögen 98 der Leitkurve (zur Definition des Begriffs "Leitkurve" siehe beispielsweise Bronstein-Semendjajew, Taschenbuch der Mathematik, Verlag Harri Deutsch, 9. Auflage 1969, Seite 149 - 151) sind über abwechselnd konkave Abschnitte 73 und konvexe Abschnitte 72 verbunden. Zwischen den konkaven Abschnitten 73 und konvexen Abschnitten 72 wird die Leitkurve durch Geraden 85, 86, 87 gebildet. Dabei schließen einander benachbarte Geraden 86 und 87 sowie einander spiegelbildlich gegenüberliegende Geraden 86, 85 miteinander einen Winkel von ca. 90° ein. Es hat sich gezeigt, daß dieser Winkel der Geraden 85, 86 und 87 zueinander bzw. der zugehörigen Zylinder- bzw. Kegelstumpfwandflächen insbesondere dann zu einer optimalen Krafteinleitung in die Seltenwandflächen des Gehäuseschafts 66 führt, wenn die Antriebswelle 23 links- und rechtsdrehend bzw. alternierend die Drehrichtung wechselnd, angetrieben ist. Im speziellen Ausführungsbeispiel der Fig. 3 sind die Kreisbögen 98 auf beiden Seiten über jeweils zwei konkave Abschnitte 73 und drei konvexe Abschnitte 72 verbunden. Eine Fase 97 im Bereich der durch die Kreisbögen 98 gebildeten Zylinderwandflächen sorgt für eine Erleichterung der Einführung des Gehäuseschafts 66 in den Profilring 27.

Das Innenprofil 90 des Profilringes 27 ist komplementär zum Außenprofil 91 des Gehäuseschafts 66 gestaltet, wie insbesondere aus dem Schnitt B-B der Fig. 4 erkennbar ist. Im Bereich der Rastmittel 96 weist der Profilring 27 einen kreisförmigen Innenquerschnitt 88 (Schnitt D-D der Fig. 4) auf, der sich kegelmantelförmig verjüngt und übergeht in das Innenprofil 90 des Profilringes 27. Durch diese Maßnahme wird das Einführen des Gehäuseschafts 66 in den Profilring 27 erheblich erleichtert.

Aufgrund der besonderen Gestaltung des Innenprofils 90 des Profilringes 27 und des entsprechenden, komplementären Außenprofils 91 des Gehäuseschafts 66 werden die zwischen dem Gehäuseschaft 66 und dem Profilring 27 zu übertragenden Drehmomente bzw. Kräfte flächig in die jeweiligen Bauteile eingeleitet. Eine Linien- oder Punktberührung der zusammenwirkenden Bauteile, die zu einer Beschädigung oder zu einem erhöhten Verschleiß der Oberflächen der Teile führt, ist praktisch ausgeschlossen. Dieser Vorteil macht sich insbesondere bei den im vorliegenden Ausführungsbeispiel Anwendung findenden Werkstoffen - Griffteil 22 und Profilring 27 bestehen aus technischem Kunststoff - in besonderer Weise vorteilhaft bemerkbar. Die besondere Ausgestaltung des Ausführungsbeispiels hinsichtlich der Anordnung der einander benachbarten bzw. gegenüberliegenden Geraden 85, 86 und 87 und der zugehörigen Zylinder- oder Kegelstumpfflächen in ungefähr rechtwinkliger Zuordnung zueinander, ist insbesondere dann von Vorteil, wenn eine alternierende Drehbewegung der Antriebswelle 23 auf die Welle 34 zu übertragen ist. Aber auch für eine Übertragung einer kontinuierlichen Drehbewegung, sei es nun links- oder rechtsdrehend, von der Antriebswelle 23 auf die Welle 34, kommt das spezielle Innen- bzw. Außenprofil 90, 91 vorteilhaft zum Tragen.

Die Welle 34 ist in Fig. 5 im einzelnen dargestellt. Die Außenwand der Welle 34 ist im Bereich der Aufnahmehülse 82 von einer U-förmigen Aussparung 95 durchbrochen, wodurch eine Federzunge 50 gebildet wird. Die an der Innenwand der Federzunge 50 angeformte Rastnase 52 greift in die Rastkerbe 54 der Antriebswelle 23 ein und legt über diese Rastung den Bürstenteil 24 am Griffteil 22 in axialer Richtung fest. Eine Kraftübertragung zwischen der Antriebswelle 22 und der Welle 34 ist über die halbkreisförmigen Querschnitte 84 der Antriebswelle 23 und der Aufnahmeöffnung der Aufnahmehülse 82 gewährleistet, wobei die ebenen Flächen 89 der Antriebswelle 23 und eine Fläche 93 der Aufnahmehülse 82 einander gegenüberliegen. Zur Erleichterung des Einführens der Antriebswelle 23 in die Aufnahmehülse 82 sind im Inneren der Aufnahmehülse 82 Mittel zur Zwangsausrichtung der Welle 34 bezüglich der Antriebswelle 23, die beim Einführen wirksam werden, vorgesehen. Die Zwangsführungsmittel bestehen in einem ersten Ausführungsbeispiel (Fig. 5) aus einer im Innenwandbereich der Aufnahmehülse 82 angeordneten, keilförmigen Nase 67, welche der Federzunge 50 diametral gegenüberliegt. Beiderseits der Nase 67 sind Schraubenflächen 76, 78 vorgesehen, wobei die Schraubenfläche 76 eine Linkssteigung und die Schraubenfläche 78 eine Rechtssteigung aufweist. Die beiden Schraubenflächen 76, 78 werden konstruktiv durch eine Gerade erzeugt, die die Längsmittelachse der Welle 34 senkrecht schneidet. Die Schraubenflächen 76, 78 laufen aus in die ebene Fläche 93. Befinden sich die Antriebswelle 23 und die Welle 34 vor Beginn des Kupplungsvorganges des Bürstenteils 24 an dem Griffteil 22 in einer verdrehten Positionierung zueinander, derart, daß der halbkreisförmige Querschnitt 84 der Antriebswelle 23 und der Aufnahmehülse 82 nicht miteinander zur Deckung kommen, so wirken die Fläche 89 der Antriebswelle 23 und die Schraubenfläche 76 oder 78 in der Weise zusammen, daß beim Einführen der Antriebswelle 23 in die Aufnahmehülse 82 die Welle 34, entweder rechts- oder linksherum, in die passende Kopplungsposition selbsttätig gedreht wird. Durch diese Maßnahme können Relativverdrehungen der Antriebswelle 23 bezüglich der Welle 34 von ca. +/- 90° ausgeglichen werden. Ein größerer Bereich als +/- 90° ist im vorliegenden Ausführungsbeispiel deshalb nicht erforderlich, da die Drehbewegung der Welle 34 und Antriebswelle 23 durch nicht dargestellte Mittel auf einen Bereich von maximal +/- 70° um eine Nullage eingeschränkt ist. Eine Ausweitung des "Fangbereiches" der Mittel 65 zur Zwangsführung der Welle 34 auf einen Bereich von ca. +/- 180° ist jedoch beispielsweise dadurch ohne weiteres möglich, daß die Formschlußverbindungen zwischen der Antriebswelle 23 und der Aufnahmehülse 82 in einer 180°-Drehsymmetrie bezüglich der Längsmittelachse der Welle 34 ausgestaltet werden. Die "richtige" Position von Bürstenteil 24 und Griffteil 22 wird zunächst einmal dadurch bestimmt, daß der Gehäuseschaft 66 in den Profilring 27 einführbar sein muß. Relative Verdrehungen der Antriebswelle 23 und Welle 34 bezüglich dieser "richtigen" Position werden dann durch die Mittel 65 zur Zwangsausrichtung während des Kopplungsvorganges ausgeglichen.

Eine weitere Ausgestaltung der Mittel 65 zur Zwangsführung der Welle 34 ist in Fig. 6 dargestellt, wobei die sonstige Ausgestaltung der Welle 34 unverändert ist. Auch die Lage der Schnitte G-G und C-C der Fig. 6 entspricht der der Fig. 5. Die Mittel 65 zur Zwangsführung sind als Kreissegmentprofil 80 ausgebildet, welches anstelle der keilförmigen Nase 67 gegenüberliegend der Federzunge 50 in der Aufnahmehülse 82 angeordnet ist. Mit diesem Kreissegmentprofil 80 wirkt zusammen die Fase 56 der Antriebswelle 23. Sind die Welle 34 bzw. die Aufnahmehülse 82 und die Antriebswelle 23 nicht passend zueinander ausgerichtet, so übt die schräge Fläche der Fase 56 beim Einführen der Antriebswelle 23 in die Aufnahmehülse 82 über das Kreissegmentprofil 80 ein Drehmoment auf die Welle 34 aus, derart, daß die Welle 34 selbsttätig in die richtige Kopplungsposition ausgerichtet wird. Die Ausführung der Mittel 65 gemäß dem Beispiel der Fig. 6 hat gegenüber der Ausführungsform gemäß Fig. 5 den Vorteil, daß die Spritzgußform zur Erstellung der Welle 34 einfacher aufgebaut sein kann. Von der Wirkung her sind die Mittel 65 der Fig. 5 und 6 im wesentlichen identisch.

Die Erfindung findet bevorzugt, aber nicht ausschließlich, auf eine Zahnbürste Anwendung, deren Borstenträger 38 senkrecht zur Längsmittelachse des Bürstenteils 24 alternierend in einem Winkel von ca. +/- 35° rotiert, und die in der internationalen Anmeldung PCT/DE90/00672, WO91/07116 beschrieben ist.

Aufgrund der beschriebenen funktionellen Trennung der Mittel für eine axiale sowie radiale Festlegung des Bürstenteils 24 am Griffteil 22 lassen sich in vorteilhafter Weise Toleranzen in der Positionierung der zu verbindenden Teile miteinander ausgleichen. So muß zum Beispiel die Welle 34 im Bereich der Ringschulter 58 nicht bezüglich einer radialen Auslenkung festgelegt sein und daher die Längsmittelachse der Antriebswelle 23 nicht exakt mit der Längsmittelachse der Welle 34 fluchten. Darüber hinaus besteht die Möglichkeit, die einem Verschleiß unterworfenen Rastmittel - hier insbesondere die Rastnase 52 und die Federzunge 50 in solche Teile der Zahnbürste, nämlich den Bürstenteil 24 zu verlagern, der aus medizinischen bzw. hygienischen Gründen ohnehin einem häufigeren Austausch unterworfen wird. Der Griffteil 22 als langlebiges, nicht austauschbares Teil weist keinerlei Rastmittel auf und ist daher auch keinem Verschleiß aufgrund häufiger Verbindung des Bürstenteils 24 mit dem Griffteil 22 unterworfen.

## Patentansprüche

1. Elektrische Zahnbürste (20) mit den Merkmalen
a) ein Griffteil (22) umfaßt einen elektromotorischen Antrieb (28) und eine Antriebswelle (23),
b) ein Bürstenteil (24) umfaßt eine Welle (34) zum Antrieb eines drehbaren Borstenträgers (38) und ein Gehäuse zur Aufnahme der Welle (34) sowie zur Lagerung des Borstenträgers (38),
c) die Antriebswelle (23) und die Welle (34) sind über Kopplungsmittel (82, 84, 89, 93) miteinander koppelbar,
d) der Bürstenteil (24) ist mit dem Griffteil (22) über Kupplungsmittel zur Festlegung des Bürstenteils (24) am Griffteil (22) verbindbar, wobei Kupplungsmittel, die dem Gehäuse des Bürstenteils (24) und dem Griffteil (22) zugeordnet sind, zusammenwirken
gekennzeichnet durch
e) eine Festlegung des Bürstenteils (24) am Griffteil (22) in - bezogen auf eine Längsmittelachse der Welle (34) - axialer und radialer Richtung, jeweils durch separate Kupplungsmittel, wobei Kupplungsmittel (52, 54), die der Antriebswelle (23) und der Welle (34) zugeordnet sind, zusammenwirken.

2. Elektrische Zahnbürste nach Anspruch 1, dadurch gekennzeichnet, daß die Kopplungsmittel der Antriebswelle (23) und der Welle (34) als Axialsicherung (44) und die Kupplungsmittel des Gehäuses des Bürstenteils (24) und des Griffteils (22) als Radialsicherung (41) zur Festlegung des Bürstenteils (24) am Griffteil (22) ausgebildet sind.

3. Elektrische Zahnbürste nach Anspruch 1 oder 2, dadurch gekennzeichnet, daß eine Axialsicherung (44) mittels Rastmittel (50, 52) der Welle (34) erfolgt, die in ein Widerlager (54) der Antriebswelle (23) eingreifen.

4. Elektrische Zahnbürste nach Anspruch 3, dadurch gekennzeichnet, daß eine Aufnahmehülse (82) der Welle (34) zur Aufnahme der Antriebswelle (23) Mittel (65) aufweist, die die Welle (34) aus einer beliebigen Antriebsstellung heraus beim Kopplungsvorgang zwischen der Antriebswelle (23) und der Welle (34) zwangsweise in eine vorgegebene Kopplungsposition ausrichten.

5. Elektrische Zahnbürste nach Anspruch 4, dadurch gekennzeichnet, daß die Mittel (65) als rechts- bzw. linkssteigende Schraubenflächen (76, 78) ausgebildet sind, die mit einem einseitig abgeflachten Endstück (77, 89) der Antriebswelle (23) zur Zwangsausrichtung der Welle (34) zusammenwirken.

6. Elektrische Zahnbürste nach Anspruch 4, dadurch gekennzeichnet, daß die Mittel (65) als Kreissegmentprofil (80) ausgebildet sind, die mit einer Fase (56) am Endstück (77) der Antriebswelle (23) zur Zwangsausrichtung der Welle (34) zusammenwirken.

7. Elektrische Zahnbürste nach wenigstens einem der Ansprüche 1 bis 6, dadurch gekennzeichnet, daß eine Radialsicherung (41) mittels kraftübertragender Wandflächen eines Profils (91) des Griffteils (22) erfolgt, welche mit entsprechenden, komplementär geformten Wandflächen eines Profils (90) des Gehäuses des Bürstenteils (24) zusammenwirken.

8. Elektrische Zahnbürste nach Anspruch 7, dadurch gekennzeichnet, daß einander benachbarte, ebene Wandflächenabschnitte der Profile (90, 91) in einem Winkel von etwa 90° zueinander angeordnet sind.

9. Elektrische Zahnbürste nach Anspruch 7 oder 8, dadurch gekennzeichnet, daß einander spiegelbildlich gegenüberliegende, ebene Wandflächen der Profile (90, 91) in einem Winkel von etwa 90° zueinander angeordnet sind.

10. Elektrische Zahnbürste nach einem der Ansprüche 7 bis 9, dadurch gekennzeichnet, daß die Übergänge zwischen einzelnen benachbarten, ebenen Wandflächen der Profile (90, 91) durch konvexe Abschnitte (72) bzw. konkave Abschnitte (73) eines Zylinders oder Kegelstumpfes gebildet sind.

## Claims

1. An electric toothbrush (20) incorporating the following features:
(a) a handle section (22) comprising an electric motor drive (28) and a drive shaft (23);
(b) a brush section (24) comprising a shaft (34) for driving a rotary bristle supporting structure (38) and a housing for receiving the shaft (34) as well as for mounting the bristle supporting structure (38);
(c) the drive shaft (23) being adapted to engage with the shaft (34) by engaging means (82, 84, 89, 93);
(d) the brush section (24) being adapted to be connected to the handle section (22) by coupling means (40) for positioning the brush section (24) in its proper location relative to the handle section (22), with coupling means which are associated with the housing of the brush section (24) and with the handle section (22) being in relative cooperation;
characterized by
(e) a location of the brush section (24) relative to the handle section (22) in an axial and a radial direction--with respect to a longitudinal center line of the shaft (34)--by respective separate coupling means, with coupling means (52, 54) which are associated with the drive shaft (23) and with the shaft (34) being in relative cooperation.

2. The electric toothbrush as claimed in claim 1, characterized in that the engaging means of the drive shaft (23) and the shaft (34) is configured as an axial securing means (44), and that the coupling means of the housing of the brush section (24) and the handle section (22) is configured as a radial securing means (41) for locating the brush section (24) relative to the handle section (22).

3. The electric toothbrush as claimed in claim 1 or claim 2, characterized in that an axial securing function (44) is accomplished by locking means (50, 52) on the shaft (34) engaging in a complementary abutment means (54) on the drive shaft (23).

4. The electric toothbrush as claimed in claim 3, characterized in that, for receiving the drive shaft (23), a mounting sleeve (82) of the shaft (34) includes means (65) forcing the shaft (34) from any drive position into alignment with a predetermined engagement position during the engagement operation of the drive shaft (23) with the shaft (34).

5. The electric toothbrush as claimed in claim 4, characterized in that the means (65) are configured as right-hand and left-hand helicoidal surfaces (76, 78) which cooperate with an end segment (77, 89) of the drive shaft (23) having one side flattened for forcing the shaft (34) into alignment.

6. The electric toothbrush as claimed in claim 4, characterized in that the means (65) are configured as a circular-segment profile (80) cooperating with a chamfer (56) provided on the end segment (77) of the drive shaft (23) for forcing the shaft (34) into alignment.

7. The electric toothbrush as claimed in at least one of the claims 1 to 6, characterized in that a radial securing function (41) is accomplished by means of load-transmitting wall surfaces of a profile (91) on the handle section (22) which cooperate with corresponding complementary wall surfaces of a profile (90) on the housing of the brush section (24).

8. The electric toothbrush as claimed in claim 7, characterized in that adjacent planar wall surface sections of the profiles (90, 91) are arranged at a relative angle of 90°, approximately.

9. The electric toothbrush as claimed in claim 7 or claim 8, characterized in that opposed mirror-image planar wall surfaces of the profiles (90, 91) are arranged at a relative angle of 90°, approximately.

10. The electric toothbrush as claimed in any one of the claims 7 to 9, characterized in that the transitions intermediate individual adjacent planar wall surfaces of the profiles (90, 91) are formed by convex sections (72) or concave sections (73) of a cylinder or frustum of a cone.

## Revendications

1. Brosse à dents électrique (20) comportant les particularités suivantes:
a) un élément de préhension comprend un entraînement à moteur électrique (28) et un arbre d'entraînement (23),
b) un élément de brosse (24) comprend un arbre (34) pour l'entraînement d'un support de brosse (38) qui peut tourner et un boîtier pour le logement de l'arbre (34) ainsi que pour le montage du support de brosse (38),
c) l'arbre d'entraînement (23) et l'arbre (34) peuvent être accouplés l'un à l'autre par l'intermédiaire de moyens d'accouplement (82, 84, 89, 93),
d) l'élément de brosse (24) peut être relié à l'élément de préhension (22) par l'intermédiaire de moyens d'accouplement pour la fixation de l'élément de brosse (24) sur l'élément de préhension (22), des moyens d'accouplement qui sont adjoints au boîtier de l'élément de brosse (24) et à l'élément de poignée (22) coopérant, caractérisé par:
e) une fixation de l'élément de brosse (24) à l'élément de poignée (22) en direction axiale et radiale, par rapport à un axe médian longitudinal de l'arbre (34), chaque fois par des moyens d'accouplement séparés, des moyens d'accouplement (52, 54) qui sont adjoints à l'arbre d'entraînement (23) et à l'arbre (34) coopérant.

2. Brosse à dents électrique suivant la revendication 1, caractérisée en ce que les moyens d'accouplement de l'arbre d'entraînement (23) et de l'arbre (34) sont réalisés sous la forme d'un blocage axial (44) et en ce que les moyens d'accouplement du boîtier de l'élément de brosse (24) et de l'élément de préhension (22) sont réalisés sous la forme d'un blocage radial (41) pour la fixation de l'élément de brosse (24) sur l'élément de préhension (22).

3. Brosse à dents électrique suivant la revendication 1 ou 2, caractérisée en ce qu'un blocage axial (44) a lieu au moyen de moyens d'accrochage élastique (50, 52) de l'arbre (34) qui pénètrent dans un contre-appui (54) de l'arbre d'entraînement (23).

4. Brosse à dents électrique suivant la revendication 3, caractérisée en ce qu'un manchon de logement (82) de l'arbre (34) présente, pour le logement de l'arbre d'entraînement (23), des moyens qui orientent obligatoirement dans une position d'accouplement prédéterminée l'arbre (34), à partir d'une position d'entraînement quelconque, lors du processus d'accouplement entre l'arbre d'entraînement (23) et l'arbre (34).

5. Brosse à dents électrique suivant la revendication 4, caractérisée en ce que les moyens (65) sont réalisés sous la forme de surfaces hélicoïdales (76, 78) qui montent vers la droite et vers la gauche et qui coopèrent pour l'orientation obligée de l'arbre (34) avec une pièce d'extrémité (77, 89), de l'arbre d'entraînement (23), aplatie d'un côté.

6. Brosse à dents électrique suivant la revendication 4, caractérisée en ce que les moyens (65) sont réalisés sous la forme de profilés en segments de cercle (80) qui coopèrent pour l'orientation obligée de l'arbre (34) avec un chanfrein (56) de la pièce d'extrémité (77) de l'arbre d'entraînement (23).

7. Brosse à dents électrique suivant l'une au moins des revendications 1 à 6, caractérisée en ce qu'un blocage radial (41) a lieu au moyen de faces de paroi, d'un profilé (91) de l'élément de préhension (22), qui transmettent une force et qui coopèrent avec des faces de paroi correspondantes et façonnées complémentairement d'un profilé (90) du boîtier de l'élément de brosse (24).

8. Brosse à dents électrique suivant la revendication 7, caractérisée en ce que des tronçons de faces de paroi voisins l'un de l'autre et plans des profilés (90, 91) sont agencés selon un angle d'approximativement 90° l'un par rapport à l'autre.

9. Brosse a dents électrique suivant la revendication 7 ou 8, caractérisée en ce que des faces de paroi, des profilés (90, 91), planes et disposées symétriquement à l'opposé l'une de l'autre sont agencées selon un angle d'approximativement 90° l'une par rapport à l'autre.

10. Brosse à dents électrique suivant l'une des revendications 7 à 9, caractérisée en ce que les transitions entre des faces de paroi séparées, voisines, planes, des profilés (90, 91) sont formées par des tronçons convexes (72) ou respectivement concaves (73) d'un cylindre ou d'un tronc de cône.
